(19) **Europäisches Patentamt / European Patent Office / Office européen des brevets**

(11) **EP 4 004 355 B1**

(12) # FASCICULE DE BREVET EUROPEEN

(45) Date de publication et mention de la délivrance du brevet:
**30.08.2023 Bulletin 2023/35**

(21) Numéro de dépôt: **20753991.7**

(22) Date de dépôt: **16.07.2020**

(51) Classification Internationale des Brevets (IPC):
**F02C 7/268** (2006.01)  **F01D 15/10** (2006.01)
**F02C 7/32** (2006.01)  **F02C 7/36** (2006.01)
**F02K 5/00** (2006.01)

(52) Classification Coopérative des Brevets (CPC):
**F02C 7/32; F01D 5/026; F01D 15/10; F01D 21/003; F02C 7/268; F02C 7/36; F02K 5/00;** F05D 2220/76; F05D 2220/7644; F05D 2240/60; F05D 2260/40311; F05D 2270/023; Y02T 50/60

(86) Numéro de dépôt international:
**PCT/FR2020/051292**

(87) Numéro de publication internationale:
**WO 2021/019144 (04.02.2021 Gazette 2021/05)**

(54) **TURBOMACHINE COMPRENANT UNE MACHINE ÉLECTRIQUE AYANT UNE FONCTION DE DÉMARREUR-GÉNÉRATEUR ET PROCÉDÉ DE RÉGULATION DE LA VITESSE D'UNE TELLE MACHINE ÉLECTRIQUE**

TURBOMASCHINE MIT EINER ELEKTRISCHEN MASCHINE MIT STARTER-GENERATORFUNKTION UND VERFAHREN ZUR REGELUNG DER DREHZAHL EINER SOLCHEN ELEKTRISCHEN MASCHINE

TURBOMACHINE COMPRISING AN ELECTRIC MACHINE HAVING A STARTER-GENERATOR FUNCTION AND METHOD FOR CONTROLLING THE SPEED OF SUCH AN ELECTRIC MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.07.2019 FR 1908561**

(43) Date de publication de la demande:
**01.06.2022 Bulletin 2022/22**

(73) Titulaire: **SAFRAN AIRCRAFT ENGINES 75015 Paris (FR)**

(72) Inventeur: **DE WERGIFOSSE, Huguette 77550 MOISSY-CRAMAYEL (FR)**

(74) Mandataire: **Gevers & Orès Immeuble le Palatin 2 3 Cours du Triangle CS 80165 92939 Paris La Défense Cedex (FR)**

(56) Documents cités:
**EP-A1- 3 382 183     EP-A2- 2 103 795 FR-A1- 3 062 424     GB-A- 2 461 973**

**Description**

**Domaine technique de l'invention**

L'invention se rapporte au domaine des turbomachines, et plus précisément à une turbomachine comprenant une machine électrique ayant des fonctions de moteur, démarreur et générateur. L'invention concerne également un procédé de régulation de la vitesse de la machine électrique de la turbomachine.

**Arrière-plan technique**

L'état de la technique comprend notamment les documents EP3382183A1, EP2103795A2, EP2103795A3, GB2461973A et FR3062424A1.

De façon connue, une turbomachine installée sur un aéronef est équipée d'un générateur, et plus précisément d'une génératrice intégrée (également connue sous l'acronyme !DG de l'expression anglaise « Integrated Drive Generator »), configuré pour délivrer une puissance électrique à une fréquence constante, par exemple une puissance électrique de 115 V en courant alternatif triphasé à 400 Hz.

Le générateur est conçu pour recevoir de l'énergie mécanique par la rotation de son arbre d'entrée à différentes vitesses de rotation, et pour transformer cette énergie mécanique en énergie électrique. En général, le générateur est entraîné par un arbre de sortie d'un boîtier de relais d'accessoires (également connu sous l'acronyme AGB de l'expression anglaise « Accessory Gear Box ») de la turbomachine. La vitesse de rotation de l'arbre d'entrée du générateur et la vitesse de sortie du boîtier de relais d'accessoires sont donc liées par un rapport de réduction fixe aux vitesses variables de la turbomachine. Pour obtenir une fréquence constante, le générateur doit être entraîné à une vitesse constante.

Pour cela, un dispositif de commande de la vitesse entre l'arbre de sortie du boîtier de relais d'accessoires et l'arbre d'entrée du générateur peut être installé, afin de maintenir une vitesse constante de l'axe de rotation du générateur.

En particulier, un générateur délivrant une puissance électrique à une fréquence constante peut être équipé d'un dispositif hydromécanique à différentiel pour assurer un réglage de la vitesse constante du générateur.

Le dispositif de commande de la vitesse est généralement constitué d'un moteur hydraulique à cylindrée fixe. La vitesse du moteur hydraulique est pilotée par une boucle de régulation en pression. Le transfert de la puissance hydraulique est réalisé par un moteur hydraulique à cylindrée variable, où la cylindrée est ajustée pour assurer la conservation de débit entre les deux équipements. Pour la régulation en pression, le système hydraulique est équipé d'un régulateur en pression dissipatif.

Toutefois, la puissance mécanique prélevée sur le boîtier de relais d'accessoires n'est pas égale à la puissance délivrée par le générateur.

De plus, le dispositif hydromécanique présente des inconvénients. En particulier, le rendement global du moteur hydraulique à cylindrée fixe ou variable est faible, et notamment proche de 80%, du fait de fuites internes et de frottements. De plus, il y a des pertes de charges au niveau du dispositif hydraulique pilotant le moteur hydraulique à cylindrée variable et des pertes dissipatives au niveau du régulateur de pression pilotant la vitesse du moteur hydraulique à cylindrée fixe. En outre, le fonctionnement réversible dans les deux quadrants, c'est-à-dire avec une vitesse positive et négative du moteur-générateur, ne permet pas une optimisation en terme de rendement, et de ce fait, le rendement est inférieur à 80%. Ce dispositif hydromécanique est également peu fiable car l'ajustement de la vitesse du générateur implique un fonctionnement des moteurs hydrauliques dans une large gamme de vitesse. Ainsi, à faible vitesse ou à vitesse élevée, les rendements sont affectés et le risque d'usure est plus important. De façon connue, une turbomachine est également équipée d'un démarreur (également connu sous le nom de « starter » en anglais), par exemple pneumatique ou électrique. Un démarreur est configuré pour délivrer un couple important lors de la phase de démarrage au sol et lors de la phase d'assistance en vol de la turbomachine.

Le couple du démarreur permet de vaincre la valeur globale des couples à l'arbre haute pression provenant à la fois de la turbomachine et de tous les accessoires entraînés au travers d'une transmission mécanique par la turbomachine pendant la phase de démarrage, où seul le démarreur fournit le couple. A partir de l'allumage moteur, à environ 25% de la vitesse de la turbomachine, le démarreur et le moteur fournissent tous deux un couple moteur.

Le couple à délivrer jusqu'à 25 % de la vitesse de la vitesse de la turbomachine peut être très élevé du fait des couples liés aux accessoires, ou tout simplement du fait de l'inertie propre de la turbomachine.

Le générateur peut fonctionner comme un démarreur électrique, notamment par une alimentation appropriée au moyen de bobines reliées au générateur. Toutefois, la taille du générateur est conditionnée par son couple maximal. Or, dans la majorité des applications, le couple maximal à délivrer par le démarreur jusqu'à 25% de la vitesse de la turbomachine est presque le double du couple délivré par la turbomachine en mode générateur.

A l'heure actuelle, des systèmes de démarreur-générateur à vitesse constante permettent d'atteindre le couple requis au démarrage sans impacter la taille du générateur grâce à un système mécanique de désaccouplement des accessoires lors de la phase de démarrage. Ce système implique l'intégration d'un différentiel supplémentaire au dispositif hydromécanique à différentiel. Lors de la phase de démarrage, un frein actif libère les accessoires qui ne sont plus entraînés par le démarreur. En fin de phase de démarrage, le frein est désactivé et les accessoires sont entraînés par l'arbre de sortie du boîtier de relais d'accessoires de la turbomachine. Cependant, ce système comporte un frein électromagnétique qui peut être à l'origine de panne dormante.

D'autre part le supplément de couple à délivrer par le démarreur lors de la phase de démarrage n'est pas forcément lié aux accessoires mais aussi à l'inertie de la turbomachine. Dans ce cas le système de désaccouplement des accessoires ne répond pas au besoin du couple élevé au démarrage.

Ainsi, ce système est complexe et n'est pas assez fiable, notamment par la présence du système de freinage électromécanique.

Une alternative serait de doubler la taille du générateur pour développer un couple deux fois supérieur en mode démarreur. Toutefois, cette alternative pose des problèmes d'encombrement au sein de la turbomachine.

L'invention a pour objectif de proposer une solution permettant de remédier à au moins certains de ces inconvénients.

En particulier, la présente invention propose un mode d'entrainement permettant d'augmenter le couple au démarrage sans impacter la taille du générateur, et sans ajout de composants autres que ceux qui sont déjà présents pour assurer le fonctionnement du générateur à vitesse constante.

## Résumé de l'invention

À cet effet, l'invention concerne une turbomachine, notamment d'aéronef, comportant :

- un boîtier de relais d'accessoires,
- une première machine électrique,
- un démarreur-générateur intégrant une deuxième machine électrique configurée pour fonctionner en mode démarreur et en mode générateur, ladite première machine électrique et ledit démarreur-générateur intégrant la deuxième machine électrique étant agencés pour transférer de la puissance électrique de l'un à l'autre,
- des moyens de commande configurés pour commander ladite première machine électrique et le démarreur-générateur, et
- un réducteur à train épicycloïdal comprenant trois éléments, un planétaire central, une couronne externe et un porte-satellites dont les satellites s'engrènent avec ledit planétaire et ladite couronne, lesdits trois éléments étant mobiles en rotation autour d'un axe du réducteur, un premier desdits trois éléments étant destiné à être couplé au boîtier de relais d'accessoires, un deuxième desdits trois éléments étant destiné à être couplé au démarreur-générateur intégrant la deuxième machine électrique, un troisième desdits trois éléments étant entraîné en rotation par ladite première machine électrique,

dans laquelle lesdits moyens de commande sont configurés pour modifier la vitesse de rotation de la première machine électrique et du démarreur-générateur intégrant la deuxième machine électrique de manière à fournir au démarreur-générateur en mode démarreur un couple maximal,

et dans laquelle lesdits moyens de commande sont configurés pour modifier la vitesse de rotation de la première machine électrique de manière à ce que ledit démarreur-générateur en mode générateur soit entraîné en rotation à une vitesse constante.

La deuxième machine électrique peut être indépendante ou faire partie du démarreur-générateur.

Les moyens de commande peuvent donc être configurés pour commander la première machine électrique, la deuxième machine électrique et le démarreur-générateur.

La deuxième machine électrique peut être soit couplée sur l'axe du démarreur-générateur, soit sur l'axe du boîtier de relais d'accessoires.

Les moyens de commande peuvent être configurés pour modifier la vitesse de rotation de la première machine électrique de manière à fournir au démarreur-générateur en mode démarreur un couple maximal.

Selon un mode de réalisation, le démarreur-générateur intégrant la deuxième machine électrique est configuré pour fonctionner en mode démarreur et en mode générateur, et la première machine électrique est configurée pour fonctionner en mode moteur et en mode générateur. Les première et deuxième machines électriques travaillent ainsi dans deux quadrants moteur et générateur.

Les première et deuxième machines électriques peuvent être agencées pour transférer de la puissance électrique de l'une à l'autre.

Les moyens de commande peuvent être configurés pour modifier la vitesse de rotation de la première machine électrique de manière à fournir au démarreur-générateur en mode démarreur un couple maximal.

Les moyens de commande peuvent être configurés pour modifier la vitesse de rotation de la première machine électrique de manière à ce que le démarreur-générateur en mode générateur soit entraîné en rotation à une vitesse constante.

Pour toutes les configurations où la deuxième machine électrique est positionnée sur l'axe du démarreur-générateur, le démarreur-générateur peut être simplifié en intégrant les fonctions du démarreur-générateur et de la deuxième machine électrique.

Selon l'invention, une machine électrique est un dispositif configuré pour travailler dans les deux quadrants moteur et générateur.

Un générateur est un dispositif configuré pour convertir de l'énergie mécanique due à la rotation de son arbre d'entrée en une énergie électrique.

Une machine moteur-générateur assure à la fois la fonction de moteur, c'est-à-dire de conversion d'une énergie électrique en énergie mécanique, et celle de générateur, c'est-à-dire de conversion d'une énergie mécanique en énergie électrique. Ainsi, dans une machine moteur-générateur, la fonction du moteur ou du générateur est réversible. Un démarreur est un dispositif destiné à aider au démarrage de la turbomachine. Le démarreur est configuré pour fournir de l'énergie électrique pour entraîner la turbomachine lors des phases de démarrage. Le fonctionnement d'un démarreur est auto-entretenu.

Le démarreur-générateur peut être utilisé pour entraîner la turbomachine lors des phases de démarrage ou générer un courant électrique lorsque la turbomachine est allumée. Le démarreur-générateur fonctionne comme un moteur électrique pour fournir le couple nécessaire au démarrage de la turbomachine, puis, une fois la turbomachine démarrée, comme un générateur fournissant un courant électrique.

L'invention propose ainsi une turbomachine intégrant un dispositif d'entrainement de la machine électrique en mode démarreur-générateur à partir du boîtier de relais d'accessoires. Le dispositif d'entrainement comporte la première machine électrique, le démarreur-générateur, la deuxième machine électrique, le réducteur et les moyens de commande.

Le dispositif d'entrainement selon l'invention est avantageusement purement électrique ce qui permet de supprimer les pertes dissipatives présentes dans les dispositifs d'entrainement selon l'art antérieur et incorpore un transfert de puissance électrique entre la première machine électrique et la deuxième machine électrique.

La vitesse de rotation de la turbomachine, et donc du démarreur-générateur en mode générateur, étant généralement variable, afin d'ajuster la vitesse de sortie du démarreur-générateur en mode générateur à une valeur constante, la turbomachine comporte un réducteur à train épicycloïdal pour intégrer un degré d'adaptation supplémentaire. La transmission par le réducteur à train épicycloïdal permet de relier l'axe entraîné par le boîtier de relais d'accessoires, le démarreur-générateur et la première machine électrique, et ainsi d'ajuster la vitesse du démarreur-générateur en mode générateur à une valeur constante. Le réducteur à train épicycloïdal se comporte comme un différentiel, et permet de lier ces trois équipements et de moduler la vitesse de l'arbre de la première machine électrique.

Ainsi, le pilotage de la vitesse de la première machine électrique permet d'assurer une vitesse constante de sortie du démarreur-générateur en mode générateur pour une vitesse d'entrée du côté du boîtier de relais d'accessoires.

La deuxième machine électrique permet d'assurer le transfert de puissance électrique avec la première machine électrique.

Lors de la phase de démarrage, le couple entraînant la turbomachine et les accessoires est délivré par le démarreur-générateur fonctionnant en mode démarreur, et les première et deuxième machines électriques, fonctionnent en mode moteur, indépendamment de leur positionnement dans le dispositif d'entrainement.

Le couple maximal à développer par la première machine électrique et la deuxième machine électrique sont suffisants pour atteindre le couple maximal requis par la phase de démarrage en cumulant le couple maximal développé par le démarreur. La vitesse maximale du démarreur-générateur est conditionnée par la vitesse maximale en mode générateur.

Ainsi, la présente invention permet d'intégrer la fonctionnalité du démarreur au dispositif d'entrainement, tout en apportant une solution à la problématique du couple élevé à délivrer par le démarrer lors de la phase de démarrage.

La vitesse de sortie du générateur est avantageusement maintenue constante sans prélèvement de puissance additionnelle à l'arbre de sortie du boîtier de relais d'accessoires de la turbomachine. Ainsi, la puissance prélevée à l'arbre de sortie du boîtier de relais d'accessoires est intégralement transformée en puissance électrique. Le dispositif d'entrainement selon l'invention permet de travailler dans les deux quadrants, sans pénalisation en termes de rendement des machines électriques.

De plus, le dispositif d'entrainement est fiable, notamment grâce à la redondance des machines électriques, contrairement aux dispositifs selon l'art antérieur dans lesquels redondance hydraulique n'est pas concevable techniquement.

En outre, le nombre de composants du dispositif est limité, le dispositif d'entrainement ne comprenant pas de dispositif de régulateur de pression, ni de dispositif de régulateur de cylindrée comme dans l'art antérieur.

Le dispositif d'entrainement a également la capacité de fonctionner en démarreur en développant le couple maximal requis au niveau de l'axe de la turbomachine, et ce sans machines supplémentaires, ni augmentation de la taille des composants.

Le réducteur à train épicycloïdal est agencé entre l'arbre de sortie du boîtier de relais d'accessoires et l'arbre d'entrée du démarreur-générateur afin de maintenir une vitesse constante de l'axe de rotation du démarreur-générateur, et plus précisément du générateur.

Ainsi, la présente invention propose une mode d'entrainement à différentiel entre la turbomachine et un démarreur-générateur permettant à la fois un fonctionnement du générateur à vitesse constante et un fonctionnement du démarreur avec un couple égal au double du couple en mode générateur, sans impact de masse du générateur. De plus, ce mode d'entrainement ne requiert aucun désaccouplement des accessoires.

Les première et deuxième machines électriques peuvent fonctionner en moteur-générateur.

De préférence, la première machine électrique et le démarreur-générateur intégrant la deuxième machine électrique ou la deuxième machine électrique sont asynchrones.

La turbomachine peut comprendre au moins un convertisseur de puissance réversible agencé entre la première machine électrique et ledit démarreur-générateur intégrant la deuxième machine électrique ou la deuxième machine électrique de manière à transférer de la puissance électrique de manière réversible de l'un à l'autre.

Selon un premier mode de réalisation, le premier des trois éléments est le porte-satellites, le deuxième desdits trois éléments est la couronne, et le troisième desdits trois éléments est le planétaire.

Selon un deuxième mode de réalisation, le premier des trois éléments est la couronne, le deuxième desdits trois éléments est le porte-satellites, et le troisième desdits trois éléments est le planétaire.

Selon un troisième mode de réalisation, le deuxième des trois éléments est destiné à être couplé au démarreur-générateur. Dans ce mode de réalisation, le premier des trois éléments est le porte-satellites, le deuxième desdits trois éléments est la couronne, et le troisième desdits trois éléments est le planétaire. Dans cette configuration, le premier desdits trois éléments peut également être couplé à la deuxième machine électrique. Selon un quatrième mode de réalisation, le deuxième des trois éléments est destiné à être couplé au démarreur-générateur. Dans ce mode de réalisation, le premier des trois éléments est la couronne, le deuxième desdits trois éléments est le porte-satellites, et le troisième desdits trois éléments est le planétaire. Dans cette configuration, le premier desdits trois éléments peut également être couplé à la deuxième machine électrique.

L'invention concerne également un procédé de régulation de la vitesse d'un démarreur-générateur d'une turbomachine selon l'invention dans un aéronef, comprenant une étape de modification de la vitesse du troisième des trois éléments en pilotant la première machine électrique au moyen des moyens de commande de manière à ce que le démarreur-générateur intégrant la deuxième machine électrique en mode générateur soit entraîné en rotation à une vitesse constante.

## Brève description des figures

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :

[Fig. 1a-1b] les figures 1a et 1b représentent très schématiquement différentes configurations cinématiques d'une turbomachine selon un premier mode de réalisation de l'invention ;

[Fig. 2] la figure 2 représente très schématiquement une configuration cinématique d'une turbomachine selon un deuxième mode de réalisation de l'invention ;

[Fig. 3a-3b] les figures 3a et 3b représentent très schématiquement différentes configurations cinématiques d'une turbomachine selon un quatrième mode de réalisation de l'invention ;

[Fig. 4] la figure 4 représente très schématiquement une configuration cinématique d'une turbomachine selon un troisième mode de réalisation de l'invention ; et [Fig. 5a-5c] les figures 5a, 5b et 5c représentent des vues en éclaté et un schéma d'un réducteur à train épicycloïdal d'une turbomachine selon l'invention.

Les éléments ayant les mêmes fonctions dans les différentes mises en oeuvre ont les mêmes références dans les figures.

## Description détaillée de l'invention

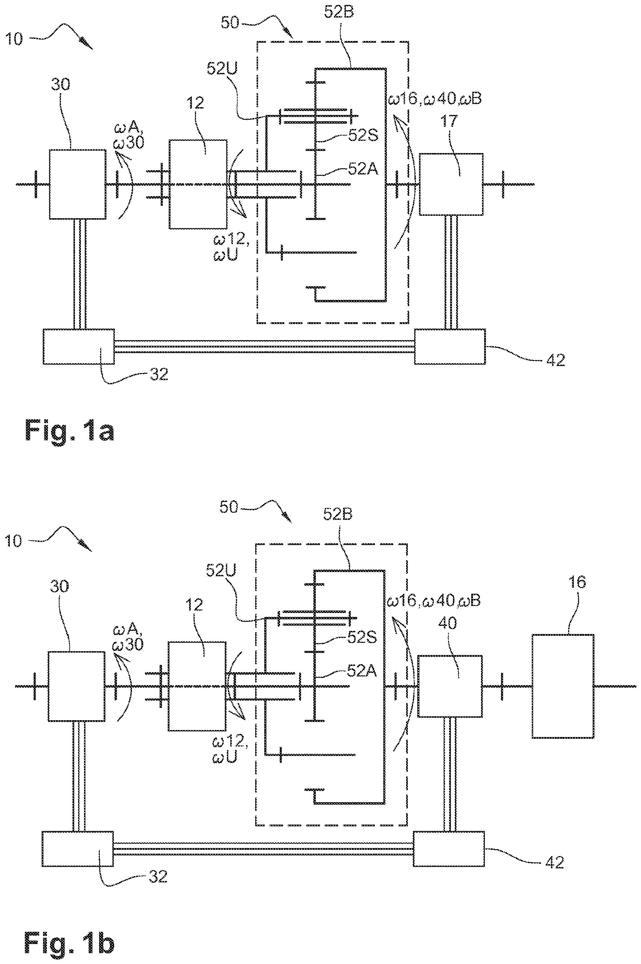

Les figures 1 à 4 représentent une turbomachine 10 selon l'invention.

La turbomachine 10 comporte un boîtier de relais d'accessoires 12 qui est configuré pour être entraîné par un axe moteur. Le boîtier de relais d'accessoires 12 peut comporter plusieurs trains d'engrenages reliés à des arbres de sortie pour entraîner divers équipements. Ici, un des arbres de sortie 14 du boîtier d'engrenages entraîne un démarreur-générateur 16 ou un démarreur-générateur 17 intégrant une deuxième machine électrique 40. Le boîtier de relais d'accessoires 12 fait généralement le lien entre l'axe moteur et le démarreur-générateur, qui peut être utilisé pour entraîner la turbomachine lors des phases de démarrage ou générer un courant électrique lorsque la turbomachine est allumée.

La vitesse du boîtier de relais d'accessoires 12 peut être une vitesse élevée de l'ordre de 20000 tours par minute. Le démarreur-générateur 17 peut être limité à une vitesse de rotation maximale inférieure à la vitesse du boîtier de relais d'accessoires 12.

La turbomachine 10 comprend une première machine électrique 30, et des moyens de commande configurés pour commander la première machine électrique 30. La première machine électrique 30 peut fonctionner en mode moteur ou en mode générateur. Autrement dit, la première machine électrique 30 peut être configurée pour fonctionner en mode générateur en fournissant de l'énergie électrique et pour fonctionner en mode moteur en récupérant de l'énergie électrique.

Les moyens de commande sont également configurés pour commander le démarreur-générateur 17.

La première machine électrique 30 et la machine électrique 17 ou la deuxième machine électrique 40 sont agencées pour transférer de la puissance électrique de l'une à l'autre. De préférence, la première machine électrique 30, la deuxième machine électrique 40 et le démarreur-générateur 17 sont asynchrones en courant alternatif.

La turbomachine 10 peut comprendre des convertisseurs de puissance 32, 42 réversibles agencés entre la première machine électrique et le démarreur-générateur 17 ou la deuxième machine électrique 40 de manière à transférer de la puissance électrique de manière réversible de l'un à l'autre. Les convertisseurs de puissance peuvent être des onduleurs ou des redresseurs, en fonction du mode moteur ou générateur. Les convertisseurs de puissance peuvent convertir un courant électrique alternatif triphasé.

Selon un mode de réalisation de l'invention, le démarreur-générateur 17 peut comporter le démarreur-générateur 16 qui est configuré pour fonctionner en mode démarreur et en mode générateur.

Le démarreur-générateur 17 peut également comporter une deuxième machine électrique 40 qui est configurée pour fonctionner en mode moteur ou générateur. La deuxième machine électrique 40 peut fonctionner en un moteur-générateur.

Les moyens de commande peuvent également être configurés pour commander la deuxième machine électrique 40.

La première machine électrique 30 et la deuxième machine électrique 40 peuvent être agencées pour transférer de la puissance électrique de l'une à l'autre.

De préférence, les première et deuxième machines électriques 30, 40, sont asynchrones en courant alternatif.

La turbomachine 10 peut comprendre des convertisseurs de puissance 32, 42 réversibles agencés entre les première et deuxième machines électriques 30, 40 de manière à transférer de la puissance électrique de manière réversible de l'une à l'autre. Plus précisément, la première machine électrique 30 est reliée à un premier convertisseur de puissance 32, et la deuxième machine électrique 40 est reliée à un deuxième convertisseur de puissance 42, et les premier et deuxième convertisseurs de puissance 32, 42 sont connectés ensemble. Chaque machine électrique 30, 40 fonctionne dans deux quadrants moteur et générateur.

La turbomachine 10 comprend également un réducteur à train épicycloïdal 50. Les propriétés du réducteur à train épicycloïdal sont utilisées pour adapter la vitesse de rotation du démarreur-générateur 16.

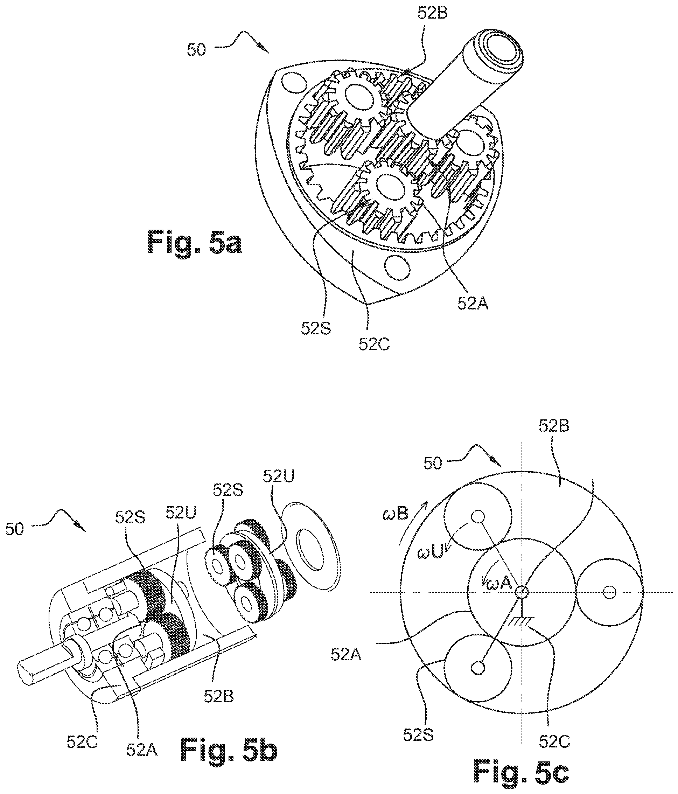

Les figures 5a, 5b et 5c représentent un réducteur à train épicycloïdal 50.

Le réducteur à train épicycloïdal 50 comporte un planétaire central 52A, agencé pour pouvoir tourner autour de l'axe du réducteur à une vitesse de rotation, notée wA, et un porte-satellites 52U agencé pour pouvoir tourner autour de l'axe du réducteur à une vitesse de rotation, notée $\omega$U.

Le réducteur à train épicycloïdal 50 comporte également des satellites 52S qui s'engrènent avec le planétaire central 52A et qui sont portés par un porte-satellites 52U. Le réducteur à train épicycloïdal 50 comporte également une couronne 52B externe agencée pour pouvoir tourner autour de l'axe du réducteur à une vitesse de rotation, notée wB, et avec laquelle les satellites 52S s'engrènent également.

Dans le réducteur à train épicycloïdal 50, les trois éléments, à savoir le planétaire central 52A, le porte-satellites 52U et la couronne 52B, sont mobiles en rotation autour de l'axe du réducteur. Par exemple, la couronne 52B est libre de tourner à l'intérieur d'un carter fixe 52C qui est configuré pour protéger le réducteur 50.

Le fonctionnement du réducteur à train épicycloïdal 50 est régi par la formule de Willis. Il s'agit d'un mécanisme à deux degrés de liberté, dans lequel la connaissance des vitesses de rotation de deux éléments parmi le planétaire central 52A, le porte-satellites 52U et la couronne 52B, permet le calcul de la vitesse de rotation du troisième élément. La formule de Willis s'exprime par les équations suivantes :

[Math 1]

$$\frac{\omega A - \omega U}{\omega B - \omega U} = k$$

ou

[Math 2]

$$\omega A - k \times \omega B + (k - 1) \times \omega U = 0$$

avec wA la vitesse de rotation du planétaire central 52A, $\omega U$ la vitesse de rotation du porte-satellites 52U, $\omega B$ la vitesse de rotation de la couronne 52B, et le facteur k, également appelé raison, une constante déterminée par la géométrie des engrenages. Pour le réducteur de la figure 5, le facteur k respecte l'équation suivante :

[Math 3]

$$k = -\frac{ZB}{ZA}$$

avec ZA le nombre de dents du planétaire central 52A et ZB le nombre de dents de la couronne 52B. Le facteur k est donc négatif avec un module inférieur à 1.

Le boîtier de relais d'accessoires 12 est couplé à l'un des trois éléments du réducteur 50, le démarreur-générateur 17 intégrant la deuxième machine 40, et plus précisément le démarreur-générateur 16, est couplé à un deuxième élément du réducteur 50, et la première machine électrique 30 est couplée au troisième élément du réducteur 50 pour piloter la vitesse de rotation de ce dernier.

Selon l'invention, les moyens de commande sont configurés pour modifier la vitesse de rotation du troisième élément, c'est-à-dire la vitesse de rotation $\omega 30$ de la première machine électrique 30, de manière à ce que le deuxième élément, c'est-à-dire le démarreur-générateur 17 en mode générateur, ou le démarreur-générateur 16 en mode générateur, soit entraîné en rotation à une vitesse constante.

Afin d'obtenir une vitesse de rotation constante du démarreur-générateur 17 en mode générateur, ou du démarreur-générateur 16 en mode générateur, pour une vitesse de rotation donnée de l'arbre de sortie 14 du boîtier de relais d'accessoires 12, il est possible de faire varier la vitesse de rotation du troisième élément du réducteur 50. Selon l'invention, les moyens de commande sont configurés pour modifier la vitesse de rotation de la première machine électrique 30 et du démarreur-générateur 17, ou de la deuxième machine électrique 40, de manière à fournir au démarreur-générateur 17 en mode démarreur un couple maximal.

Six combinaisons cinématiques sont possibles pour positionner les trois équipements, à savoir le boîtier de relais d'accessoires 12, le démarreur-générateur 17 intégrant la deuxième machine électrique 40, ou le démarreur-générateur 16, et la première machine électrique 30, par rapport aux trois éléments du réducteur à train épicycloïdal 50.

Le démarreur-générateur 17, ou la deuxième machine électrique 40, est également couplé à l'un des éléments du réducteur 50. La deuxième machine électrique 40 peut être positionnée sur l'axe du démarreur-générateur 17 et faire partie de ce démarreur-générateur, ou sur l'axe du démarreur-générateur 16, ou sur l'axe du boîtier de relais d'accessoires.

La première machine électrique 30 et la deuxième machine électrique 40 comportent chacune un stator et un rotor. Les première et deuxième machines électriques 30, 40 sont pilotables en couple appliqué sur leur rotor et en vitesse de rotation w30, $\omega 40$ de leur rotor. Le couple et la vitesse de chaque machine électrique 30, 40 sont alors pilotés par la puissance électrique et la fréquence du courant envoyé par les convertisseurs de puissance 32, 42 dédié à chacune.

Par ailleurs, la deuxième machine électrique 40 est électriquement liée à la première machine électrique 30 par l'intermédiaire des convertisseurs de puissance réversibles 32, 42 afin de faire passer de la puissance de l'une à l'autre.

La position de la deuxième machine électrique 40 multiplie par deux le nombre de combinaisons possibles pour le dispositif d'entrainement 20. On obtient ainsi douze combinaisons répertoriées dans le tableau ci-dessous.

Le tableau ci-dessous indique également la fonction donnant la vitesse de rotation $\omega 16$ démarreur-générateur 17 en mode générateur, et plus précisément celle du démarreur-générateur 16 en mode générateur, à partir de la vitesse de rotation $\omega 12$ de l'arbre de sortie 14 du boîtier de relais d'accessoires 12 et de la vitesse de rotation w30 de la première machine électrique 30. La vitesse de rotation ω40 de la machine électrique est déterminée par la vitesse de rotation de l'équipement avec lequel il est couplé en série sur le réducteur 50. Dans ce tableau, l'option 1 correspond aux cas où le démarreur-générateur 17 en mode moteur, ou la deuxième machine électrique 40, est couplée en série avec le démarreur-générateur 17 en mode générateur, ou avec le démarreur-générateur 16, sur le même élément du réducteur 50, et l'option 2 correspond aux cas où le démarreur-générateur 17 en mode moteur, ou la deuxième machine électrique 40, est couplée en série avec l'arbre de sortie du boîtier de relais d'accessoires 12 sur le même élément du réducteur 50.

[Tableau 1]

| Liaison boîtier de relais d'accessoires / démarreur-générateur / première machine électrique | | | Vitesse démarreur-générateur | Liaison deuxième machine électrique | |
|---|---|---|---|---|---|
| Boîtier de relais d'accessoires 12 relié au porte-satellites 52U | | | | Option 1 | Option 2 |
| | Première machine électrique 30 | Démarreur-générateur 17, 16 | | | |
| 1A | Couronne 52B | Planétaire 52A | $\omega 16 = (1 - k) \times \omega 12 + k \times \omega 30$ | Planétaire 52A | Porte-satellites 52 L. |
| 1B | Planétaire 52A | Couronne 52B | $\omega 16 = -\omega 12 \times \dfrac{1 - k}{k} + \dfrac{\omega 30}{k}$ | Couronne 52B | Porte-satellites 52L |
| Boîtier de relais d'accessoires 12 relié à la couronne 52B | | | | Option 1 | Option 2. |
| | Première machine électrique 30 | Démarreur-générateur 17,16 | | | |
| 2A | Porte-satellites 52U | Planétaire 52A | $\omega 16 = k \times \omega 12 + (1 - k) \times \omega 30$ | Planétaire 52A | Couronne 5 28 |
| 2B | Planétaire 52A | Porte-satellites 52U | $\omega 16 = -\omega 12 \times \dfrac{k}{1 - k} + \dfrac{\omega 30}{1 - k}$ | Porte-satellites 52U | Couronne 52B |
| Boîtier de relais d'accessoires 12 relié au planétaire 52A | | | | Option 1 | Option 2 |
| | Première machine électrique 30 | Démarreur-générateur 17, 16 | | | |
| 3A | Couronne 52B | Porte-satellites 52U | $\omega 16 = \dfrac{\dfrac{\omega 12}{1 - k} - \omega 30}{\dfrac{k}{1 - k}}$ | Porte-satellites 52U | Planétaire 52A |
| 3B | Porte-satellites 52U | Couronne 52 8 | $\omega 16 = \dfrac{\dfrac{\omega 12}{k} - \omega 30}{\dfrac{1 - k}{k}}$ | Couronne 52 8 | Planétaire 52A |

Les couples délivrés par le boîtier de relais d'accessoires 12, le démarreur-générateur 16 ou le démarreur-générateur 17 intégrant la deuxième machine électrique 40, et la première machine électrique 30 sont reliés par une expression d'équilibre du train.

En particulier, une étude du réducteur 50 permet d'obtenir la relation d'équilibre du train et la relation d'équilibre de puissance suivantes :

[Math 4]

$$CA + CB + CU = 0$$

[Math 5]

$$\omega A \times CA + \omega B \times CB + \omega U \times CU = 0$$

avec CA le couple s'exerçant sur le planétaire 52A, CB le couple s'exerçant sur la couronne 52B, CU le couple s'exerçant sur le porte-satellites 52U, $\omega A$ la vitesse de rotation du planétaire central 52A, $\omega B$ la vitesse de rotation de la couronne 52B et $\omega U$ la vitesse de rotation du porte-satellites 52U.

Il en résulte un couple au niveau de la première machine électrique 30, et donc une puissance motrice ou génératrice au niveau de cette machine selon le sens de la vitesse et du couple.

La deuxième machine électrique 40 est mise en série avec le démarreur-générateur 16, ou avec le boîtier de relais d'accessoires 12, et de ce fait la vitesse de rotation $\omega 40$ de la deuxième machine électrique 40 est déterminée comme étant égale à celle de cet équipement.

Ainsi, la deuxième machine électrique 40 apporte un degré de liberté supplémentaire au dispositif d'entrainement suivant le couple qu'il exerce et qui vient s'ajouter à celui du démarreur-générateur 16 ou du boîtier de relais d'accessoires 12 sur l'élément correspondant du réducteur 50.

Ce degré de liberté supplémentaire est utilisé pour assurer un transfert de puissance avec la première machine électrique 30.

En effet, sans l'ajout de la deuxième machine électrique 40, qui permet le transfert de puissance avec la première machine électrique 30, la puissance prélevée sur l'axe du boîtier de relais d'accessoires 12 serait dans certaines phases de vol de la turbomachine inférieure à la puissance électrique délivrée par le démarreur-générateur 16 et dans certaines phases de vol de la turbomachine supérieure aux besoins de la phase de vol. Dans le cas d'une puissance électrique délivrée par le démarreur-générateur 16 en mode générateur supérieure à la puissance prélevée sur le boîtier de relais d'accessoires 12, le gain de puissance provient de la puissance électrique prélevée par la première machine électrique 30 en mode moteur.

Dans le cas d'une puissance électrique délivrée par le démarreur-générateur 16 en mode générateur inférieure à la puissance prélevée sur le boîtier de relais d'accessoires 12, la perte de puissance est prélevée par la première machine électrique 30 en mode générateur.

La batterie de la première machine électrique 30 permet de récupérer de la puissance électrique pendant les phases génératrices et de restituer cette puissance électrique pendant les phases motrices.

Le mode de pilotage de la première machine électrique 30 permet son fonctionnement dans les quatre quadrants, en termes de couple et de vitesse.

L'énergie globale prélevée sur le boîtier de relais d'accessoires 12 pendant toute la phase de vol correspond alors à l'énergie électrique délivrée par le démarreur-générateur 16 en mode générateur.

L'équilibre approché entre l'énergie motrice et l'énergie génératrice se traduit par une optimisation des paramètres, tels que la raison k du train épicycloïdal du réducteur 50 et la vitesse de rotation d'entrée du côté du boîtier de relais d'accessoires 12.

En effet, le dispositif d'entrainement 20 dépend de plusieurs paramètres dont : la raison k du train épicycloïdal du réducteur 50, le rapport de la vitesse de rotation $\omega 12$ en sortie du boîtier de relais d'accessoires 12 par rapport à la vitesse de rotation de l'axe moteur de la turbomachine et la valeur maximale de la vitesse de rotation $\omega 16$ du démarreur-générateur 16 en mode générateur.

Un choix parmi les douze configurations peut être fait en optimisant ces paramètres pour atteindre en particulier les objectifs suivants :

- avoir une vitesse du démarreur-générateur 16 supérieure à la vitesse du boîtier de relais d'accessoires 12 ;
- réduire le couple de la première machine électrique 30 pour l'optimisation de la taille du moteur;
- avoir la vitesse de la première machine électrique 30 la plus élevée possible ;
- avoir la vitesse de la deuxième machine électrique 40 la plus élevée possible ; et
- optimiser les transferts de puissance entre la première machine électrique 30 et la deuxième machine électrique 40 lors du fonctionnement du démarreur-générateur 16 en mode générateur.

Toutes les combinaisons du tableau 1 ne permettent pas forcément d'atteindre ces objectifs.

Une étude particulière d'optimisation de chaque combinaison est donc nécessaire pour motiver un choix de mise en oeuvre sur une turbomachine. Les combinaisons décrites ci-dessous présentent divers avantages à considérer pour une intégration dans une turbomachine.

La figure 1a illustre la configuration « 1B-Option 1 » dans laquelle le boîtier de relais d'accessoires 12 est relié au porte-satellites 52U, le démarreur-générateur 17 intégrant la deuxième machine électrique 40 est relié à la couronne 52B et la première machine électrique 30 est reliée au planétaire central 52A.

La figure 1b illustre la configuration « 1B-Option 1 » dans laquelle le boîtier de relais d'accessoires 12 est relié au porte-satellites 52U, le démarreur-générateur 16 est relié à la couronne 52B et la première machine électrique 30 est reliée au planétaire central 52A. Dans cette configuration, la deuxième machine électrique 40 est reliée à la couronne 52B.

Ces configurations permettent de répondre aux contraintes suivantes :

- vitesse de rotation $\omega 16$ du démarreur-générateur 17 intégrant la deuxième machine électrique 40, ou du démarreur-générateur 16, supérieure à la vitesse de rotation $\omega 12$ du boîtier de relais d'accessoires 12, notamment grâce à la liaison du démarreur-générateur 16 à la couronne 52B ;
- réduction du couple de la première machine électrique 30 pour l'optimisation de la taille du moteur, notamment grâce à la liaison de la première machine électrique 30 sur le planétaire 52A ;
- vitesse de rotation w30 de la première machine électrique 30 la plus élevée possible, notamment grâce à la liaison de la première machine électrique 30 sur le planétaire 52A ; et
- vitesse de rotation $\omega 40$ du démarreur-générateur 17 en mode moteur, ou de la deuxième machine électrique 40, la plus élevée possible, notamment grâce à la liaison du démarreur-générateur 17 en mode moteur ou de la deuxième machine électrique 40 sur la couronne 52B.

Dans ces configurations, le pilotage de la première machine électrique 30 et du démarreur-générateur 17 en mode moteur, ou de la deuxième machine électrique 40, est réalisé au travers d'onduleur-redresseur 32, 42.

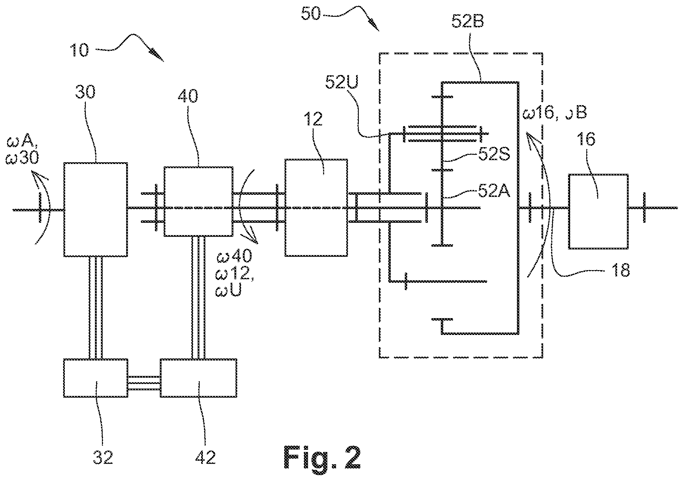

La figure 2 illustre la configuration « 1B-Option 2 » dans laquelle le boîtier de relais d'accessoires 12 est relié au porte-satellites 52U, le démarreur-générateur 16 est relié à la couronne 52B et la première machine électrique 30 est reliée au planétaire central 52A. Dans cette configuration, la deuxième machine électrique 40 est reliée au porte-satellites 52U.

Cette configuration permet de répondre aux contraintes suivantes :

- vitesse de rotation $\omega 16$ du démarreur-générateur 16 supérieure à la vitesse de rotation $\omega 12$ du boîtier de relais d'accessoires ;
- réduction du couple de la première machine électrique 30 pour l'optimisation de la taille du moteur ; et
- vitesse de rotation w30 de la première machine électrique 30 la plus élevée possible.

Dans cette configuration, le pilotage de la deuxième machine électrique 40 comprend une boucle de commande en couple et vitesse, la deuxième machine électrique 40 et le boîtier de relais d'accessoires 12 étant reliés au même élément du réducteur 50.

Le choix du positionnement de la deuxième machine électrique 40 sur l'axe du démarreur-générateur 16 (configuration « 1B-Option 1 ») ou sur l'axe du boîtier de relais d'accessoires 12 (configuration « 1B-Option 2 ») dépend de l'application, et principalement de l'agencement et de l'encombrement des équipements, et de la vitesse maximale de la turbomachine 10 et de la vitesse maximale du démarreur-générateur 16 qui est délimitée par le couple maximal, et donc par la puissance maximale.

D'autres architectures ne sont pas forcément incompatibles de l'application. Le choix de la configuration dépend des niveaux de puissance de l'application considérée.

Un choix parmi les douze configurations peut être fait en optimisant ces paramètres pour atteindre en particulier les objectifs suivants :

- avoir une vitesse du démarreur-générateur 16 inférieure à la vitesse du boîtier de relais d'accessoires 12 ;
- réduire le couple de la première machine électrique 30 pour l'optimisation de la taille du moteur ;
- avoir la vitesse de la première machine électrique 30 la plus élevée possible ;
- avoir la vitesse de la deuxième machine électrique 40 la plus élevée possible ;
- optimiser les transferts de puissance entre la première machine électrique 30 et la deuxième machine électrique 40 lors du fonctionnement du démarreur-générateur 16 en mode générateur.

Le choix de la vitesse du démarreur-générateur inférieure ou supérieure à la vitesse du boîtier de relais d'accessoires dépend de la vitesse maximale du boîtier de relais d'accessoires, la vitesse maximale du démarreur-générateur étant limitée en fonction du couple à développer.

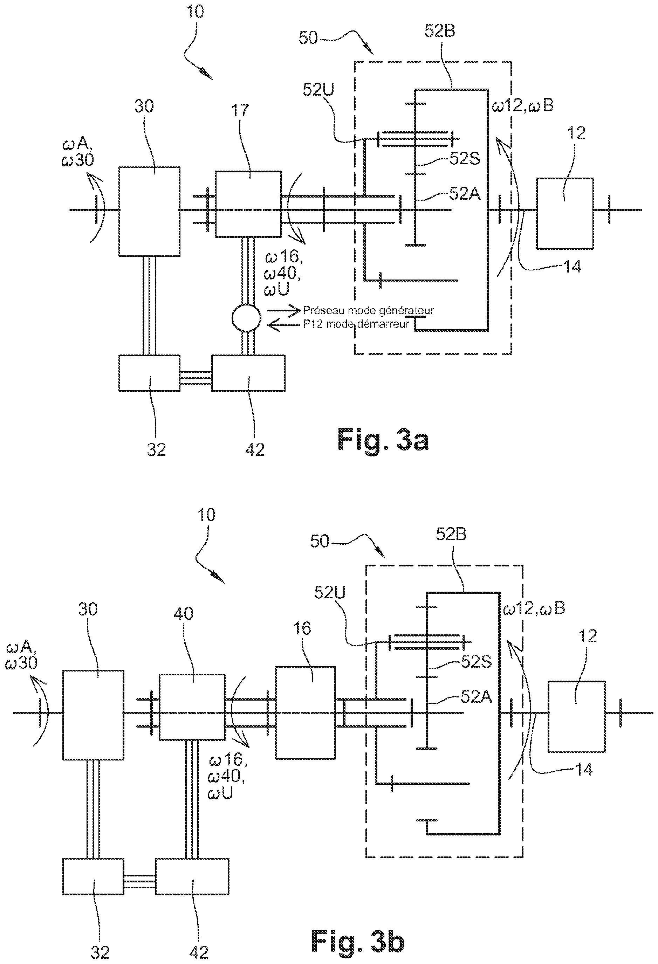

La figure 3a illustre la configuration « 2B-Option 1 » dans laquelle le boîtier de relais d'accessoires 12 est relié à la couronne 52B, le démarreur-générateur 17 intégrant la deuxième machine électrique 40 est relié au porte-satellites 52U et la première machine électrique 30 est reliée au planétaire central 52A.

La figure 3b illustre la configuration « 2B-Option 1 » dans laquelle le boîtier de relais d'accessoires 12 est relié à la couronne 52B, le démarreur-générateur 16 est relié au porte-satellites 52U et la première machine électrique 30 est reliée au planétaire central 52A. Dans cette configuration, la deuxième machine électrique 40 est reliée au porte-satellites 52U.

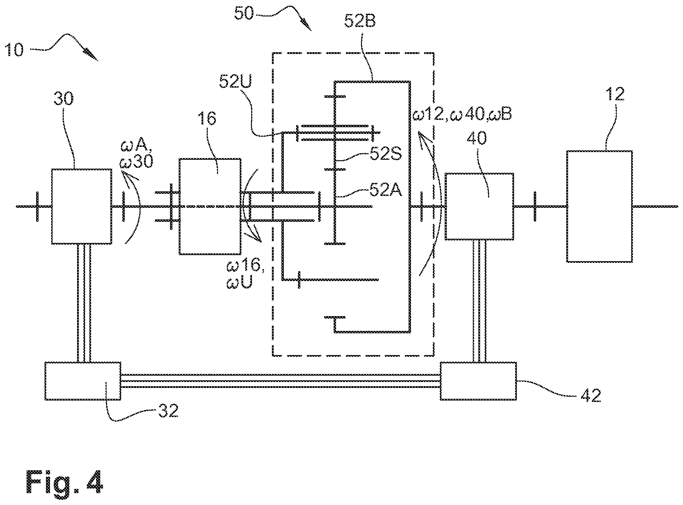

La figure 4 illustre la configuration « 2B-Option 2 » dans laquelle le boîtier de relais d'accessoires 12 est relié à la couronne 52B, le démarreur-générateur 16 est relié au porte-satellites 52U et la première machine électrique 30 est reliée au planétaire central 52A. Dans cette configuration, la deuxième machine électrique 40 est reliée à la couronne 52B.

Dans la configuration 1B, Option 1 ou Option 2, l'absence de perte provient du transfert de puissance électrique. En effet, la première machine électrique 30 peut récupérer de l'énergie en mode générateur au travers du réducteur à train épicycloïdal 50 et la restituer à la deuxième machine électrique 40, ou alors récupérer de l'énergie de la deuxième machine électrique 40 et la restituer en mode moteur au réducteur à train épicycloïdal 50.

La puissance maximale est obtenue par le démarreur-générateur 17 en mode générateur ou par le démarreur-générateur 16 en mode générateur. En général, cette puissance maximale, notée Pg_max, est prélevée en mode générateur, et est de l'ordre de 4/3 de la puissance maximale délivrée en mode démarreur, notée Pd_max. Ces puissances sont liées par l'équation suivante :

[Math 6]

$$\text{Pg\_max} = \frac{4}{3}\,\text{Pd\_max}$$

avec Pg_max la puissance maximale obtenue par le démarreur-générateur 17 intégrant la deuxième machine électrique 40 en mode générateur ou par le démarreur-générateur 16 en mode générateur et Pd_max la puissance maximale délivrée par le démarreur-générateur 17 intégrant la deuxième machine électrique 40 en mode démarreur ou par le démarreur-générateur 16 en mode démarreur,
et avec

[Math 7]

$$\text{Pd\_max} = \text{Cd\_max} * \frac{\omega d_{max}}{2}$$

avec Cd_max le couple maximal obtenu par le démarreur-générateur 17 intégrant la deuxième machine électrique 40 en mode démarreur ou par le démarreur-générateur 16 en mode démarreur et ωd_max la vitesse de rotation maximale obtenue par le démarreur-générateur 17 intégrant la deuxième machine électrique 40 en mode générateur ou par le démarreur-générateur 16 en mode générateur.

Les vitesses de rotation maximales en mode générateur et en mode démarreur sont liées par l'équation suivante :

[Math 8]

$$\omega g\_max = \omega d\_max * 2$$

avec ωg_max la vitesse de rotation maximale obtenue par le démarreur-générateur 17 intégrant la deuxième machine électrique 40 en mode générateur ou par le démarreur-générateur 16 en mode générateur et ωd_max la vitesse de rotation maximale délivrée par le démarreur-générateur 17 intégrant la deuxième machine électrique 40 en mode démarreur ou par le démarreur-générateur 16 en mode démarreur.

Le tableau ci-dessous regroupe les exigences de fonctionnement du démarreur-générateur 16 en mode démarreur et en mode générateur. Dans ce tableau, ω12_max est la vitesse de rotation maximale de l'arbre de sortie du boîtier de relais d'accessoires.

[Tableau 2]

| Niveau de vitesse | Vitesse | Puissance | Démarreur-générateur en mode démarreur | | Démarreur-générateur en mode générateur | |
|---|---|---|---|---|---|---|
| | | | Vitesse | Couple | Vitesse | Couple |
| Début du démarrage | | 0 | 0 | Cd_max | | |
| Couple maximal au démarrage | $\dfrac{\omega 12\_max}{4}$ | Pd_max | $\dfrac{\omega g\_max}{2}$ | Cd_max | | |
| Coupure | $\dfrac{\omega 12\_max}{2}$ | Pd_max | $\omega$d_max | $\dfrac{Cd\_max}{2}$ | | |
| Début du générateur | $\dfrac{\omega 12\_max}{2}$ | Pg_max | | | $\omega$d_max | $\dfrac{Cd\_max}{2}$ |
| Rallumage | $\dfrac{3}{4}\omega 12\_max$ | Pg_max | | | $\dfrac{3}{2}\omega$d_max | $\dfrac{Cd\_max}{2}$ |
| Croisière | $\dfrac{3}{4}\omega 12\_max$ | Pg_max | | | $\dfrac{3}{2}\omega$d_max | $\dfrac{Cd\_max}{2}$ |
| Vitesse maximale | $\omega$12max | Pg_max | 2*$\omega$d_max | | $\omega$g_max | $\dfrac{Cd\_max}{3}$ |

En mode générateur, la vitesse de rotation du démarreur-générateur 16 varie entre $\omega$g_max/2 et $\omega$g_max, soit dans un rapport de 2 sans la première machine électrique 30 permettant d'ajuster sa vitesse à une valeur constante.

Le dispositif d'entrainement par différentiel intègre la première machine électrique 30 qui pilote la vitesse constante de sortie du démarreur-générateur 16 en mode générateur pour une vitesse d'entrée du côté du boîtier de relais d'accessoires 12. Ici, la vitesse de rotation de sortie constante du démarreur-générateur 16 en mode générateur est égale à la valeur moyenne de sa vitesse de sortie, soit $\omega$d_max *3/2. La vitesse maximale du démarreur-générateur 16 en mode générateur ne dépasse donc pas cette valeur.

Grâce à la première machine électrique 30, la variabilité sur le rapport de réduction fixe entre l'axe du démarreur-générateur 16 et l'arbre de la turbomachine de +/- 50 %. Ce rapport est figé par le ratio entre $\omega$d_max *3/2 et la vitesse $\omega$12_max*3/4.

En fonctionnement le réducteur à train épicycloïdal 50 se comporte de trois façons différentes.

Premièrement, si la vitesse de l'arbre 14 du boîtier de relais d'accessoires 12 est telle que la vitesse du démarreur-générateur 16 en mode générateur correspond à la valeur de la vitesse constante, la vitesse de pilotage de la première machine électrique 30 est nulle et la vitesse du démarreur-générateur 16 est reliée à la vitesse de l'arbre 14 du boîtier de relais d'accessoires 12 par le rapport de réduction du train épicycloïdal à vitesse de la première machine électrique 30 nulle.

Deuxièmement, si la vitesse de l'arbre 14 du boîtier de relais d'accessoires 12 est telle que du démarreur-générateur 16 en mode générateur est supérieure à la valeur de la vitesse constante, la première machine électrique 30 est pilotée pour fonctionner dans un certain sens de rotation en mode générateur pour réduire la vitesse du démarreur-générateur 16. L'énergie récupérée est alors restituée à la deuxième machine électrique 40 fonctionnant en mode moteur. L'énergie récupérée et restituée permet de prélever au niveau de démarreur-générateur la totalité de la puissance restituée par l'axe de la turbomachine sans perte dissipative.

Lorsque la première machine électrique 30 fonctionne en mode moteur, les puissances et les couples suivent les relations suivantes :

[Math 9]

$$P16 = PT + PSortieDifférentiel = P12$$

avec P16 la puissance du démarreur-générateur, PT la puissance de transfert entre la première machine électrique 30 et la deuxième machine électrique 40, PSortieDifférentiel la puissance en sortie du réducteur à train épicycloïdal 50 et P12 la puissance du boîtier de relais d'accessoires 12.

[Math 10]

$$Cg = C40 + CSortieDifférentiel$$

avec Cg le couple du démarreur-générateur en mode générateur, C40 le couple de la deuxième machine électrique 40 et CSortieDifférentiel le couple en sortie du réducteur à train épicycloïdal 50.

La puissance transférée entre les première et deuxième machines électriques 30, 40 est égale à 50 % de la puissance du démarreur-générateur 16 en mode générateur, notée Pg.

Le couple maximal de la deuxième machine électrique 40 positionnée sur l'axe du démarreur-générateur 16 suit l'équation suivante :

[Math 11]

$$Pd_{\_max} * \frac{3}{2} * \frac{\frac{1}{2}}{\omega d_{\_max} * \frac{3}{2}} = \frac{Cd_{\_max}}{4}$$

avec Pd_max la puissance maximale du démarreur-générateur 16 en mode démarreur, ωd_max la vitesse de rotation maximale du démarreur-générateur 16 en mode démarreur et Cd_max le couple maximal du démarreur-générateur 16 en mode démarreur.

Le couple maximal récupéré par le démarreur-générateur 16 en mode générateur est égal à Cd_max/4.

Le couple maximal de la première machine électrique 30 positionnée sur le planétaire 52A est égal à k*Cd/4, avec k la raison du train.

Le choix de la raison k du train et de la vitesse de rotation constante du démarreur-générateur 16 en mode générateur sont deux paramètres qui sont adaptés pour qu'en mode démarreur le couple maximal développé par le démarreur-générateur 16 et la deuxième machine électrique 40 en mode moteur positionné sur l'axe du démarreur-générateur 16, ainsi que le couple de la deuxième machine électrique 40 en mode moteur sur le planétaire 52A permettent de développer le couple maximal requis au niveau de l'axe de la turbomachine lors de la phase de démarrage.

Comme la taille d'un démarreur-générateur 17 est principalement conditionnée par le couple à développer, il est nécessaire de ne pas dépasser la taille d'un générateur capable de développer le couple Cd_max/2, cette valeur de couple qui aurait conditionné la taille du générateur.

Troisièmement, si la vitesse de l'arbre 14 du boîtier de relais d'accessoires 12 est telle que la vitesse du démarreur-générateur 16 est inférieure aux besoins de la turbomachine 10, la première machine électrique 30 est pilotée pour fonctionner dans l'autre sens de rotation en mode moteur pour augmenter la vitesse du démarreur-générateur 16. L'énergie restituée à la première machine électrique 30 provient de l'énergie récupérée de la deuxième machine électrique 40 fonctionnant en mode générateur.

La puissance prélevée au boîtier de relais d'accessoires 12 est transformée intégralement en puissance délivrée par le démarreur-générateur 16 en mode générateur. L'absence de perte provient de ce transfert de puissance électrique : soit la première machine électrique 30 récupère de l'énergie en mode générateur au travers du réducteur à train épicycloïdal 50 et la restitue à la deuxième machine électrique 40, soit récupère de l'énergie de la deuxième machine électrique 40 et la restitue en mode moteur au réducteur à train épicycloïdal 50.

Suivant le concept et la technologie des machines électriques, de préférence de type asynchrone, la redondance des machines électriques afin de garantir une fiabilité élevée n'a qu'un faible impact sur la taille des machines électriques.

Le démarreur-générateur 17 intégrant la deuxième machine électrique 40 qui délivre la puissance électrique est dimensionnée pour une puissance, notée P17, égale à la somme de la puissance de la machine électrique 40, soit de la puissance de transfert PT, et la puissance du boîtier de relais d'accessoires, notée P12. Ce démarreur-générateur a donc une masse assez proche de la somme de la masse de la deuxième machine électrique 40 et de la masse du démarreur-générateur 16.

En effet, si la vitesse de l'arbre du boîtier de relais d'accessoires 12 est telle que la vitesse du démarreur-générateur 16 en mode générateur est inférieure aux besoins de la turbomachine, la première machine électrique 30 en mode moteur récupère une puissance motrice provenant du démarreur-générateur 17 intégrant la deuxième machine électrique 40.

Les puissances suivent alors l'équation suivante :

[Math 12]

$$\text{Préseau} = \text{P17} - \text{PT} = (\text{P12} + \text{PT}) - \text{PT} = \text{P12}$$

avec Préseau la puissance du réseau de la turbomachine, P17 la puissance du démarreur-générateur 17 intégrant la deuxième machine électrique 40, PT la puissance de transfert entre la première machine électrique 30 et le démarreur-générateur 17 intégrant la deuxième machine électrique 40 et P12 la puissance du boîtier de relais d'accessoires 12.

La puissance P17 du démarreur-générateur 17 intégrant la deuxième machine électrique 40 est donc supérieure à la puissance prélevée au niveau du boîtier de relais d'accessoires 12.

Par contre, la puissance Préseau résultante récupérée pour le réseau est égale à la puissance du boîtier de relais d'accessoires 12.

Lors de la phase de démarrage, les première et deuxième machines électriques 30, 40 fonctionnent en mode moteur et le démarreur-générateur 16 en mode démarreur entraine l'axe de la turbomachine, ainsi que les accessoires. La puissance recueillie au niveau de l'axe de la turbomachine est la résultante de la puissance alimentant le démarreur-générateur 16 en mode démarreur, de la puissance alimentant la deuxième machine électrique 40 et de la puissance alimentant la première machine électrique 30. Les puissances suivent la relation suivante :

[Math 13]

$$\text{P12} = 2 * \text{PT} + \text{Pd}$$

avec P12 la puissance du boîtier de relais d'accessoires, PT la puissance de transfert entre les première et deuxième machines électriques 30, 40 et Pd la puissance du démarreur-générateur 16 en mode démarreur.

La puissance alimentant le démarreur-générateur 17 intégrant la deuxième machine électrique 40 suit la relation suivante :

[Math 14]

$$\text{P17} = \text{Pd} + \text{PT} = \text{P12} - \text{PT}$$

avec P17 la puissance du démarreur-générateur 17 intégrant la deuxième machine électrique 40, Pd la puissance du démarreur-générateur 16 en mode démarreur, PT la puissance de transfert entre la première machine électrique 30 et le démarreur-générateur 17 intégrant la deuxième machine électrique 40 et P12 la puissance du boîtier de relais d'accessoires 12.

Le choix de la raison k du train, de la configuration du différentiel et de la vitesse constante du démarreur-générateur 16 en mode générateur permet d'atteindre le couple maximal requis au niveau de l'axe de la turbomachine.

En outre, ce mode d'entrainement à différentiel entre la turbomachine et le démarreur-générateur 16 est compatible avec un fonctionnement du démarreur-générateur 16 en mode démarreur à répartition de puissance, du fait de la présence de la première machine électrique 30 sur le planétaire 52A.

Le démarreur-générateur 16 est alimenté par une puissance constante et la première machine électrique 30 prélève une partie de la puissance aux faibles vitesses pour augmenter le couple au démarrage d'environ 50%.

L'invention concerne également un procédé de régulation de la vitesse d'un démarreur-générateur d'une turbomachine 10 telle que décrite précédemment.

Le procédé comprend une étape de modification de la vitesse du troisième des trois éléments en pilotant la première machine électrique 30 au moyen des moyens de commande de manière à ce que le démarreur-générateur 17 intégrant la deuxième machine électrique 40 en mode générateur ou le démarreur-générateur 16 soit entraîné en rotation à une vitesse constante.

En particulier, la vitesse de la première machine électrique 30 est adaptée à la vitesse de l'arbre de sortie du boîtier de relais d'accessoires 12 pour que la vitesse du démarreur-générateur 17 intégrant la deuxième machine électrique 40 en mode générateur ou du démarreur-générateur 16 soit constante.

Le procédé peut également comprendre une étape de modification de la vitesse de rotation de la première machine électrique 30 et du démarreur-générateur 17 en mode moteur, ou de la deuxième machine électrique 40, de manière à fournir audit démarreur-générateur 17 intégrant la deuxième machine électrique 40 en mode démarreur un couple maximal de ladite première machine électrique 30 et un couple maximal du démarreur-générateur 17 intégrant la deuxième machine électrique 40 en mode moteur, ou de la deuxième machine électrique 40.

## Revendications

1.  Turbomachine (10), notamment d'aéronef, comportant :

    - un boîtier de relais d'accessoires (12),
    - une première machine électrique (30),
    - un démarreur-générateur (17) intégrant une deuxième machine électrique (40) configuré pour fonctionner en mode démarreur et en mode générateur,
    ladite première machine électrique (30) et ledit démarreur-générateur (17) intégrant la deuxième machine électrique (40) étant agencés pour transférer de la puissance électrique de l'un à l'autre,
    - des moyens de commande configurés pour commander ladite première machine électrique (30) et le démarreur-générateur (17) intégrant la deuxième machine électrique (40), et
    - un réducteur à train épicycloïdal (50) comprenant trois éléments, un planétaire (52A) central, une couronne (52B) externe et un porte-satellites (52U) dont les satellites (52S) s'engrènent avec ledit planétaire (52A) et ladite couronne (52B), lesdits trois éléments étant mobiles en rotation autour d'un axe du réducteur (50), un premier desdits trois éléments étant destiné à être couplé au boîtier de relais d'accessoires (12), un deuxième desdits trois éléments étant destiné à être couplé au démarreur-générateur (17) intégrant la deuxième machine électrique (40), un troisième desdits trois éléments étant entraîné en rotation par ladite première machine électrique (30),
    dans laquelle lesdits moyens de commande sont configurés pour modifier la vitesse de rotation de la première machine électrique (30) et du démarreur-générateur (17) intégrant la deuxième machine électrique (40) de manière à fournir au démarreur-générateur (17) en mode démarreur un couple maximal,
    et dans laquelle lesdits moyens de commande sont configurés pour modifier la vitesse de rotation de la première machine électrique (30) de manière à ce que ledit démarreur-générateur (17) en mode générateur soit entraîné en rotation à une vitesse constante.

2.  Turbomachine (10) selon la revendication précédente, dans laquelle le démarreur-générateur (17) intégrant la deuxième machine électrique (40) comporte un démarreur-générateur (16) configuré pour fonctionner en mode démarreur et en mode générateur, et une deuxième machine électrique (40) configurée pour fonctionner en mode moteur, dans laquelle les première et deuxième machines électriques (30, 40) sont agencées pour transférer de la puissance électrique de l'une à l'autre, dans laquelle les moyens de commande sont configurés pour modifier la vitesse de rotation des première et deuxième machines électriques (30, 40) de manière à fournir au démarreur-générateur (16) en mode démarreur un couple maximal desdites première et deuxième machines électriques (30, 40), et dans laquelle lesdits moyens de commande sont configurés pour modifier la vitesse de rotation de la première machine électrique (30) de manière à ce que le démarreur-générateur (16) en mode générateur soit entraîné en rotation à une vitesse constante.

3.  Turbomachine (10) selon la revendication précédente, dans laquelle les première et deuxième machines électriques (30, 40) sont des moteurs-générateurs.

4.  Turbomachine (10) selon l'une des revendications précédentes, comprenant au moins un convertisseur de puissance (32, 42) réversible agencé entre ladite première machine électrique (30) et ledit démarreur-générateur (17) intégrant la deuxième machine électrique (40) ou ladite deuxième machine électrique (40) de manière à transférer de la puissance électrique de manière réversible de l'un à l'autre.

5.  Turbomachine (10) selon l'une des revendications précédentes, dans laquelle la première machine électrique (30) et le démarreur-générateur (17) intégrant la deuxième machine électrique (40) ou la deuxième machine électrique (40) sont asynchrones.

6.  Turbomachine (10) selon l'une des revendications 1 à 5, dans laquelle le premier des trois éléments est le porte-satellites (52U), le deuxième desdits trois éléments est la couronne (52B), et le troisième desdits trois éléments est le planétaire (52A).

7. Turbomachine (10) selon l'une des revendications 1 à 5, dans laquelle le premier des trois éléments est la couronne (52B), le deuxième desdits trois éléments est le porte-satellites (52U), et le troisième desdits trois éléments est le planétaire (52A).

8. Turbomachine (10) selon l'une des revendications 1 à 5, quand elle dépend de la revendication 2, dans laquelle le deuxième desdits trois éléments est destiné à être couplé au démarreur-générateur (16), et dans laquelle le premier des trois éléments est le porte-satellites (52U), le deuxième desdits trois éléments est la couronne (52B), et le troisième desdits trois éléments est le planétaire (52A), et dans lequel le premier desdits trois éléments est également couplé à ladite deuxième machine électrique (40).

9. Turbomachine (10) selon l'une des revendications 1 à 5, quand elle dépend de la revendication 2, dans laquelle le deuxième desdits trois éléments est destiné à être couplé au démarreur-générateur (16), et dans le premier des trois éléments est la couronne (52B), le deuxième desdits trois éléments est le porte-satellites (52U), et le troisième desdits trois éléments est le planétaire (52A), et dans lequel le premier desdits trois éléments est également couplé à ladite deuxième machine électrique (40).

10. Procédé de régulation de la vitesse d'un démarreur-générateur d'une turbomachine (10) selon l'une des revendications précédentes dans un aéronef, comprenant une étape de modification de la vitesse du troisième des trois éléments en pilotant la première machine électrique (30) au moyen des moyens de commande de manière à ce que le démarreur-générateur (17) intégrant la deuxième machine électrique (40) en mode générateur soit entraîné en rotation à une vitesse constante.

**Patentansprüche**

1. Turbomaschine (10), insbesondere eines Luftfahrzeugs, die Folgendes aufweist:

   - ein Zubehörteil-Relaisgehäuse (12),
   - eine erste elektrische Maschine (30),
   - einen Starter-Generator (17), der eine zweite elektrische Maschine (40) integriert, die konfiguriert ist, um im Starter-Modus und im Generator-Modus zu arbeiten, wobei die erste elektrische Maschine (30) und der Starter-Generator (17), der die zweite elektrische Maschine (40) integriert, angeordnet sind, um elektrische Leistung von einer zur anderen zu übertragen,
   - Mittel zur Steuerung, die konfiguriert sind, um die erste elektrische Maschine (30) und den Starter-Generator (17) zu steuern, der die zweite elektrische Maschine (40) integriert, und
   - ein epizyklisches Untersetzungsgetriebe (50), das drei Elemente umfasst, ein zentrales Sonnenrad (52A), einen äußeren Kranz (52B) und einen Planetenträger (52U), dessen Planetenräder (52S) mit dem Sonnenrad (52A) und dem Kranz (52B) kämmen, wobei die drei Elemente um eine Achse des Untersetzungsgetriebes (50) drehbeweglich sind, wobei ein erstes der drei Elemente dazu bestimmt ist, mit dem Zubehörteil-Relaisgehäuse (12) gekoppelt zu werden, wobei ein zweites der drei Elemente dazu bestimmt ist, mit dem Starter-Generator (17) gekoppelt zu werden, der die zweite elektrische Maschine (40) integriert, wobei ein drittes der drei Elemente von der ersten elektrischen Maschine (30) drehangetrieben wird,
   wobei die Mittel zur Steuerung konfiguriert sind, um die Drehzahl der ersten elektrischen Maschine (30) und des Starter-Generators (17), der die zweite elektrische Maschine (40) integriert, zu ändern, um den Starter-Generator (17) im Starter-Modus mit einem maximalen Drehmoment zu versorgen,
   und wobei die Mittel zur Steuerung konfiguriert sind, um die Drehzahl der ersten elektrischen Maschine (30) so zu ändern, dass der Starter-Generator (17) im Generator-Modus mit einer konstanten Drehzahl drehangetrieben wird.

2. Turbomaschine (10) nach dem vorstehenden Anspruch, wobei der Starter-Generator (17), der die zweite elektrische Maschine (40) integriert, einen Starter-Generator (16) aufweist, der konfiguriert ist, um im Starter-Modus und im Generator-Modus zu arbeiten, und eine zweite elektrische Maschine (40), die konfiguriert ist, um im Motor-Modus zu arbeiten, wobei die erste und die zweite elektrische Maschine (30, 40) angeordnet sind, um elektrische Leistung von der einen zur anderen zu übertragen, wobei die Mittel zur Steuerung konfiguriert sind, um die Drehzahl der ersten und zweiten elektrischen Maschine (30, 40) so zu ändern, dass der Starter-Generator (16) im Starter-Modus mit einem maximalen Drehmoment der ersten und zweiten elektrischen Maschine (30, 40) versorgt wird, und wobei die Mittel zur Steuerung konfiguriert sind, um die Drehzahl der ersten elektrischen Maschine (30) so zu ändern, dass der Starter-Generator (16) im Generator-Modus mit einer konstanten Drehzahl drehangetrieben wird.

3. Turbomaschine (10) nach dem vorstehenden Anspruch, wobei die erste und die zweite elektrische Maschine (30, 40) Motor-Generatoren sind.

4. Turbomaschine (10) nach einem der vorstehenden Ansprüche, umfassend mindestens einen reversiblen Leistungswandler (32, 42), der zwischen der ersten elektrischen Maschine (30) und dem Starter-Generator (17) angeordnet ist, der die zweite elektrische Maschine (40) oder die zweite elektrische Maschine (40) integriert, um elektrische Leistung reversibel von der einen zur anderen zu übertragen.

5. Turbomaschine (10) nach einem der vorstehenden Ansprüche, wobei die erste elektrische Maschine (30) und der Starter-Generator (17), der die zweite elektrische Maschine (40) oder die zweite elektrische Maschine (40) integriert, asynchron sind.

6. Turbomaschine (10) nach einem der Ansprüche 1 bis 5, wobei das erste der drei Elemente der Planetenträger (52U) ist, das zweite der drei Elemente der Kranz (52B) ist, und das dritte der drei Elemente das Sonnenrad (52A) ist.

7. Turbomaschine (10) nach einem der Ansprüche 1 bis 5, wobei das erste der drei Elemente der Kranz (52B) ist, das zweite der drei Elemente der Planetenträger (52U) ist, und das dritte der drei Elemente das Sonnenrad (52A) ist.

8. Turbomaschine (10) nach einem der Ansprüche 1 bis 5, wenn sie von Anspruch 2 abhängt, wobei das zweite der drei Elemente dazu bestimmt ist, mit dem Starter-Generator (16) gekoppelt zu werden, und wobei das erste der drei Elemente der Planetenträger (52U) ist, das zweite der drei Elemente der Kranz (52B) ist, und das dritte der drei Elemente das Sonnenrad (52A) ist, und wobei das erste der drei Elemente ebenfalls mit der zweiten elektrischen Maschine (40) gekoppelt ist.

9. Turbomaschine (10) nach einem der Ansprüche 1 bis 5, wenn sie von Anspruch 2 abhängt, wobei das zweite der drei Elemente dazu bestimmt ist, mit dem Starter-Generator (16) gekoppelt zu werden, und wobei das erste der drei Elemente der Kranz (52B) ist, das zweite der drei Elemente der Planetenträger (52U) ist, und das dritte der drei Elemente das Sonnenrad (52A) ist, und wobei das erste der drei Elemente ebenfalls mit der zweiten elektrischen Maschine (40) gekoppelt ist.

10. Verfahren zur Regelung der Drehzahl eines Starter-Generators einer Turbomaschine (10) nach einem der vorstehenden Ansprüche in einem Luftfahrzeug, umfassend einen Schritt zur Änderung der Drehzahl des dritten der drei Elemente durch Ansteuern der ersten elektrischen Maschine (30) mittels der Mittel zur Steuerung derart, dass der Starter-Generator (17), der die zweite elektrische Maschine (40) im Generator-Modus integriert, mit einer konstanten Drehzahl drehangetrieben wird.

**Claims**

1. A turbomachine (10), in particular for an aircraft, comprising:

- an accessory gear box (12),
- a first electric machine (30),
- a starter-generator (17) integrating a second electric machine (40) configured to operate in starter mode and in generator mode,
said first electric machine (30) and said starter-generator (17) integrating the second electric machine (40) being arranged to transfer electrical power from one to the other,
- control means configured to control said first electric machine (30) and the starter-generator (17) integrating the second electric machine (40), and
- an epicyclic reduction gear train (50) comprising three elements, a central planetary gear (52A), an external ring gear (52B) and a planet carrier (52U) whose planet gears (52S) mesh with said planetary gear (52A) and said ring gear (52B), said three elements being rotatable about an axis of the gearbox (50), a first of said three elements being intended to be coupled to the accessory gear box (12), a second of said three elements being intended to be coupled to the starter-generator (17) integrating the second electric machine (40), a third of said three elements being driven in rotation by said first electric machine (30),
wherein said control means are configured to modify the speed of rotation of the first electric machine (30) and the starter-generator (17) integrating the second electric machine (40) so as to provide the starter-generator (17) in starter mode with a maximum torque,

and wherein said control means are configured to modify the speed of rotation of the first electric machine (30) so that said starter-generator (17) in generator mode is driven in rotation at a constant speed.

2. The turbomachine (10) according to the preceding claim, wherein the starter-generator (17) integrating the second electric machine (40) comprises a starter-generator (16) configured to operate in starter mode and in generator mode, and a second electric machine (40) configured to operate in motor mode, wherein the first and second electric machines (30, 40) are arranged to transfer electrical power from one to the other, wherein the control means are configured to modify the speed of rotation of the first and second electric machines (30, 40) so as to provide the starter-generator (16) in starter mode with a maximum torque of said first and second electric machines (30, 40), and wherein said control means are configured to modify the speed of rotation of the first electric machine (30) so that the starter-generator (16) in generator mode is driven in rotation at a constant speed.

3. The turbomachine (10) according to the preceding claim, wherein the first and second electric machines (30, 40) are motor-generators.

4. The turbomachine (10) according to any of the preceding claims, comprising at least one reversible power converter (32, 42) arranged between said first electric machine (30) and said starter-generator (17) integrating the second electric machine (40) or said second electric machine (40) so as to transfer electrical power reversibly from one to the other.

5. The turbomachine (10) according to one of the preceding claims, wherein the first electric machine (30) and the starter-generator (17) integrating the second electric machine (40) or the second electric machine (40) are asynchronous.

6. The turbomachine (10) according to any of claims 1 to 5, wherein the first of the three elements is the planet carrier (52U), the second of said three elements is the ring gear (52B), and the third of said three elements is the planetary gear (52A).

7. The turbomachine (10) according to any of claims 1 to 5, wherein the first of the three elements is the ring gear (52B), the second of said three elements is the planet carrier (52U), and the third of said three elements is the planetary gear (52A).

8. The turbomachine (10) according to any of claims 1 to 5, when dependent on claim 2, wherein the second of said three elements is intended to be coupled to the starter-generator (16), and wherein the first of the three elements is the planet carrier (52U), the second of said three elements is the ring gear (52B), and the third of said three elements is the planetary gear (52A), and wherein the first of said three elements is also coupled to said second electric machine (40).

9. The turbomachine (10) according to any of claims 1 to 5, when dependent on claim 2, wherein the second of said three elements is intended to be coupled to the starter-generator (16), and wherein the first of said three elements is the ring gear (52B), the second of said three elements is the planet carrier (52U), and the third of said three elements is the planetary gear (52A), and wherein the first of said three elements is also coupled to said second electric machine (40).

10. A method for controlling the speed of a starter-generator of a turbomachine (10) according to one of the preceding claims in an aircraft, comprising a step of modifying the speed of the third of the three elements by controlling the first electric machine (30) by means of control means so that the starter-generator (17) integrating the second electric machine (40) in generator mode is driven in rotation at a constant speed.

**Fig. 1a**

**Fig. 1b**

Fig. 2

ωA,
ω30

ω12,ωB

ω16,
ω40,
ωU

→ Préseau mode générateur
← P12 mode démarreur

**Fig. 3a**

ωA,
ω30

ω12,ωB

ω16,
ω40,
ωU

**Fig. 3b**

21

10

50    52B

52U    ω12, ω40, ωB

30    ωA, ω30    16    52S    40    12

52A

ω16, ωU

32    42

**Fig. 4**

**Fig. 5a**

**Fig. 5b**

**Fig. 5c**

## RÉFÉRENCES CITÉES DANS LA DESCRIPTION

**Documents brevets cités dans la description**

- EP 3382183 A1
- EP 2103795 A2
- EP 2103795 A3
- GB 2461973 A
- FR 3062424 A1